# EUROPÄISCHE PATENTSCHRIFT

(11) **EP 4 198 750 B1**
(45) Veröffentlichungstag und Bekanntmachung des Hinweises auf die Patenterteilung: **10.09.2025**
(21) Anmeldenummer: 21215621.0
(22) Anmeldetag: 17.12.2021
(51) Int. Cl.: G06F 15/78, G06F 30/331

(54) **VERFAHREN ZUR DATENKOMMUNIKATION ZWISCHEN TEILBEREICHEN EINES FPGAS**
METHOD FOR DATA COMMUNICATION BETWEEN PARTIAL AREAS OF AN FPGA
PROCÉDÉ DE COMMUNICATION DES DONNÉES ENTRE LES ZONES PARTIELLES D'UN RÉSEAU PROGRAMMABLE DE PORTES

(43) Veröffentlichungstag der Anmeldung: 21.06.2023
(73) Patentinhaber: dSPACE GmbH, 33102 Paderborn (DE)
(72) Erfinder: Lubeley, Dominik, 33102 Paderborn (DE); Kalte, Heiko, 33102 Paderborn (DE)

(56) Entgegenhaltungen:
- WO-A1-01/59629
- WO-A2-02/056180
- WO-A2-2006/026799
- US-A1- 2004 113 655

## Beschreibung

Die Erfindung betrifft ein Verfahren zur Datenkommunikation zwischen zumindest einem Teilbereich eines FPGAs und einem weiteren Bereich. Auch betrifft die Erfindung eine Datenverarbeitungsvorrichtung sowie ein Computerprogrammprodukt.

Für die Regelung oder die Simulation dynamischer Systeme werden in zunehmendem Umfang Rapid-Control-Prototyping-Systeme oder Hardware-in-the-Loop-Simulatoren eingesetzt. Diese Systeme weisen zusätzlich zu in der Regel vorhandenen Mikroprozessoren einen oder mehrere unter dem Begriff Field Programmable Gate Array (abgekürzt FPGA) bekannte programmierbare Logikbausteine auf. Ein FPGA umfasst in seiner funktionalen Ebene eine Vielzahl von Logikelementen und Verbindungselementen, deren genaue Verschaltung erst während der Initialisierung mittels eines Bitstroms festgelegt wird, der in die Konfigurationsebene des Bausteins geschrieben wird. Die Architektur von FPGAs erlaubt also eine gute Anpassung an die jeweilige Anwendung und eine parallele Verarbeitung von Signalen, so dass FPGAs auch schnell veränderliche Strecken zuverlässig simulieren oder regeln können.

Die Modellierung des FPGA Designs gleicht dabei der prozessorbasierten Modellierung in Simulink. Von der prozessorbasierten Modellierung ist der Anwender gewohnt, dass sich ein Prozessormodel in wenigen Sekunden bis Minuten kompilieren und auf der Echtzeithardware ausführen lässt. Was in Simulink simulierbar ist, ist für den Prozessor kompilierbar. Begrenzende Faktoren stellen sich i.d.R. erst zur Laufzeit heraus, z.B. wenn es zu wenig allokierbaren RAM gibt oder die Rechenleistung des Prozessors zu gering ist. Da die Größe des RAMs bekannt ist, könnte man diesen Fehler als Designfehler im Modell ansehen. Gegen die zu geringe Rechenzeit kann die Taskperiode erhöht werden. In jedem Fall gilt aber, ein korrekt designtes Model ist kompilierbar und lauffähig.

Genau das ist in der FPGA-basierten Modellierung grundsätzlich anders und kann zu hohen Entwicklungsaufwänden führen. Die Kompilierung, bzw. Synthese und Implementierung eines FPGA Models ist kein Vorgang von Sekunden bis Minuten, sondern von 10 Minuten bis zu mehreren Stunden. Was in Simulink simulierbar ist, muss noch lange nicht implementierbar sein. Begrenzende Faktoren stellen auch hier abzählbare Logikelemente wie Flip-Flops, Lookup Tables, Blockrams, DSPs oder auch Artificial Intelligence Cores dar. Der Zusammenhang zwischen FPGA Model und benötigten Ressourcen ist jedoch erst nach der Synthese bekannt, die etwa 1/3 der FPGA Build Dauer benötigt. Da die Ressourcen des FPGAs bekannt sind, könnte man die Überschreitung dieser Ressourcen auch hier als einen Designfehler im Model ansehen. Verringert der Modellierer den Ressourcenbedarf seines Models entsprechend, könnte er der Meinung sein, dass damit alles in Ordnung sei. Diese Annahme ist jedoch falsch. Im Gegensatz zur festen Prozessorarchitektur, die beliebigen Modelcode ausführen kann, wird das FPGA Model während der Implementierung in eine eigene Logik-Architektur übersetzt. Dabei werden Model-Funktionalitäten auf einzelne Logikelemente gemappt und diese miteinander verbunden. Anschließend wird entschieden, wo genau welches Logikelement in dem FPGA platziert wird, und welche vorhandenen Verdrahtungselemente zum Routing zwischen den Logikelementen verwendet werden können.

Kann das Routing von FPGA Komponenten nur auf Umwegen, also extra langen Strecken realisiert werden, da kürzere Routing Wege vom Routing anderer Komponenten blockiert werden, können die Timinganforderungen (z.B. 8ns bei 125MHz Takt) nicht eingehalten werden und das Design ist in diesem FPGA nicht realisierbar. Stehen nicht genügend Routingressourcen zur Verfügung, können nicht alle platzierbaren FPGA Komponenten miteinander verbunden werden. Auch in diesem Fall ist das Design in diesem FPGA nicht realisierbar. Der Anwender bekommt also ggf. erst nach Stunden der FPGA Synthese und Implementierung die Rückmeldung, dass nicht alle Verbindungen geroutet werden konnten, oder, dass das Timing zu langsam für den vorgegebenen FPGA Takt ist.

Bisher versucht ein FPGA Modellierer die zuvor beschriebenen Probleme wie folgt zu lösen. Einem Timing-Fehler kann entgegengewirkt werden, indem zusätzliche Register in Signalpfade eingefügt werden, der FPGA Takt verringert, oder ein n-fach Downsampling der Logikschaltung vorgenommen wird, so dass einem Signal für eine Route n x z.B. 8 ns statt nur z.B. 8 ns Zeit zur Verfügung stehen. Wenn synchron zu anderen vorgegeben Takten gearbeitet werden soll, ist die Verringerung des Taktes i.d.R. nicht möglich, oder würde zusätzlich latenzbehaftete FIFOs zur Entkopplung der Clockdomains benötigen. Beim Downsampling von bestimmten FPGA Modelpfaden müssten die Pfadlängen, gemessen in Takten, aller Parallelpfade angeglichen werden.

Aus der WO 02/056180 A2 ist ein On-Chip-Datenverarbeitungssystem mit einem vom Nutzer konfigurierbaren Speichersystem und einem Prozessorkern bekannt. Das Speichersystem umfasst einen Speicherkontroller und Blockrams. Die Anzahl von Blockrams und die Anzahl von Adressleitungen zum Adressieren der Blockrams kann vom Nutzer gewählt werden. Dadurch werden nur die vom Prozessor benötigten Blockrams mit diesem verbunden, während andere verfügbar bleiben. Weiterhin können Wartezeiten des Speichersystems je nach Anzahl der Adressleitungen optimiert werden.

Die WO 01/59629 A1 offenbart einen FPGA mit einem dedizierten On-Chip-Prozessor, der verschiedene FPGA-Konfigurationsmodi unterstützt. Nach dem Einschalten liest der Prozessor an einem vorgegebenen Eingang einen Code ein, der den Konfigurationsmodus für die Initialisierung des FPGAs angibt. Je nach Konfigurationsmodus führt der Prozessor unterschiedliche Programme für die Konfiguration aus.

Für nicht genügend zur Verfügung stehende Routingressourcen gibt es keine Lösung, außer die Struktur des Models zu verändern bzw. zu verkleinern, obwohl der FPGA genug Logikressourcen besitzt. Um nicht weiter Symptome knapper Routingressourcen zu bekämpfen, muss die Frage gestellt werden, wieso es zu der Knappheit von Routingressourcen kommt und in welchen Fällen man diese vermeiden kann. Ein großer Anteil der Routingverdrahtung ist den Blockrams zuzuschreiben. Für alle Blockrams, die zur Initphase oder Laufzeit bedatet werden, muss der volle Adress- und Datenbus zu einem oder mehreren Speicher-Controllern geführt werden. Da die Blockrams sich über die gesamte Fläche des FPGAs verteilen, gehen signifikante Mengen der Routingressourcen des FPGAs verloren.

Es ist daher die technische Aufgabe der vorliegenden Erfindung, eine ressourceneffizienten Intra-FPGA Datenkommunikation bereitzustellen, bei dem die Datenkommunikation zwischen Teilbereichen eines FPGAs ressourceneffizient erfolgt.

Diese Aufgabe wird durch technische Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem Aspekt wird die erfindungsgemäße Aufgabe durch ein Verfahren zur Datenkommunikation zwischen zumindest einem Teilbereich eines FPGAs und einem weiteren Bereich gelöst, das Verfahren umfassend die folgenden Schritte:
- Bereitstellen einer FPGA-Einheit mit einem FPGA, der FPGA umfassend
   einen Kommunikationscontroller mit einem Zwischenspeicher der Kommunikationscontroller umfassend eine interne Konfigurationsschnittstelle eingerichtet zur Konfiguration des FPGAs und zum Rücklesen von Konfigurationsdaten, wobei der Kommunikationscontroller eingerichtet ist, eine Datenkommunikation zwischen Teilbereichen des FPGAs bereitzustellen, wobei die Ansteuerung der interne Konfigurationsschnittstelle über Kommandosequenzen erfolgt,
   der FPGA zumindest einen ersten Teilbereich umfasst, wobei der erste Teilbereich ein Blockram ist, wobei der Blockram über einen Blockram Frame adressierbar ist, der Blockram-Frame feste Konfigurationsbits und variable Datenbits umfasst, wobei über die Kommandosequenzen der internen Konfigurationsschnittstelle Blockram Frameinhalte lesbar und schreibbar sind, wobei die relativen Positionen und festen Werte der Konfigurationsbits sowie die relativen Positionen und die variablen Datenbits in dem Blockram Frame aus einer Rekonstruktion eines Logic Location Files ermittelt wird, wobei ein Schreiben des Blockrams mittels einer Lesen-Ändern-Schreiben-Sequenz erfolgt und die folgenden Schritte umfasst:
      - Lesen eines aktuellen Inhalts eines Blockram Frames und Abspeichern des Inhalts des Blockram Frames in den Zwischenspeicher des Kommunikationscontrollers mittels einer Lesen-Sequenz,
      - Einfügen von Datenbits an ihren festen, aus dem Logic Location File bekannten Positionen in den Blockram Frame mittels einer Schreiben-Sequenz
   oder ein Schreiben des Blockrams mittels eines Templates erfolgt, wobei das Template die aus der Rekonstruktion des Logic Location Files ermittelten relativen Positionen und festen Werte der Konfigurationsbits sowie die relativen Positionen der variablen Datenbits in dem Blockram Frame enthält, wobei das Template zuvor in dem Kommunikationscontroller abgespeichert wurde.

Die Datenbits können jeweils von einem weiteren frei konfigurierbaren Teilbereich des FPGA an den Kommunikationscontroller gesendet worden sein oder von einem Bereich außerhalb des FPGA an den Kommunikationscontroller gesendet worden sein.

Grundidee der vorliegenden Erfindung ist es, die FPGA Konfigurationsebene, die ursprünglich zur Programmierung des FPGAs dient und eine zur Laufzeit ungenutzte Kommunikationsinfrastruktur bietet, für einen Datenaustausch zwischen Teilbereichen eines FPGA zu nutzen. Dabei werden durch Kommandosequenzen mittels eines Kommunikationscontrollers ein Datentransfer zwischen Teilbereichen des FPGA aufgesetzt. Der Kommunikationscontroller steuert dazu die ungenutzte Kommunikationsinfrastuktur der Konfigurationsebene über die FPGA interne Konfigurations-Schnittstelle an, z.B. bei Xilinx FPGAs die ICAP Schnittstelle. Die Datenkommunikation kann dabei zwischen frei konfigurierbaren Teilbereichen des FPGA erfolgen oder aber auch zwischen einem frei konfigurierbaren Teilbereich des FPGA und einem Bereich außerhalb des FPGAs. Es wird daher eine Möglichkeit geschaffen, einen Datenaustausch von einer Stelle zu jedem beliebigen Blockram oder von jedem beliebigen Blockram zu jedem anderen beliebigen Blockram bereitzustellen, bei dem die normal notwendigen Routingressourcen vermindert werden.

In einer technisch vorteilhaften Ausführungsform des Verfahrens erfolgt ein Lesen der Blockrams mittels einer Blockram-Lese-Sequenz wobei das Lesen der Blockrams die folgenden Schritte umfasst:
- Extrahieren von Datenbits aus dem Blockram Frame über ihre aus dem Logic Location File bekannten Positionen mittels des Kommunikationscontrollers, wobei das Extrahieren der Datenbits mittels Kommandosequenzen der interne Konfigurationsschnittstelle erfolgt.

In einer technisch vorteilhaften Ausführungsform des Verfahrens sind im Kommunikationscontroller verschiedene Templates für verschiedene Blockram-Typen hinterlegt.

In einer technisch vorteilhaften Ausführungsform des Verfahrens sind in dem Template die relativen Positionen und festen Werte der Konfigurationsbits sowie die relativen Positionen der variablen Datenbits in einem VHDL-Code für einen FPGA Build hinterlegt.

Bei der Lesen-Ändern-Schreiben-Sequenz werden die aktuellen Frameinhalte in einen Zwischenspeicher vom Kommunikationscontroller gelesen, und die Datenbits an ihren festen, aus dem Logic Location File bekannten Positionen während des Schreibens in den Empfangs-Blockram eingefügt werden. Dadurch halbiert sich die Schreibperformance. Um das zu umgehen, kann in einer vorteilhaften Ausführungsform der Kommunikationscontroller VHDL Templates mit einmalig ermittelter Bitstromsequenz für unterschiedlichen Empfangs-Blockram Typen vorhalten.

In einer technisch vorteilhaften Ausführungsform des Verfahrens umfasst der FPGA einen Sende-Blockram und einen Empfangs-Blockram, und das Verfahren die zusätzlichen Schritte:
- Schreiben von Daten in den Sende-Blockram mittels des Verfahrensschritts für das Schreiben von Blockram,
- Triggern des Kommunikationscontrollers zum Kopieren der Daten vom Sende-Blockram in den Empfangs-Blockram,
- Kopieren der Daten von dem Sende-Blockram zu dem Empfangs-Blockram, mittels des Verfahrensschritts des Lesens des Blockrams und des Verfahrensschritts des Schreibens des Blockrams.

Der Verfahrensschritt des Schreibens von Daten in den Sende-Blockram könnte in einer Ausführungsform durch das Model selbst passieren, das Daten irgendwohin verschicken möchte. In einer weiteren Ausführungsform des Verfahrens könnte der Verfahrensschritt auch während der InitPhase von einem Initialtisierungsmechanismus im FPGA ausgelöst werden, der vom Prozessor Daten entgegennimmt und im FPGA in bestimmte Blockrams kopieren möchte.

Den Transfer kann sowohl das Model, als auch irgendein anderer Controller (z.B. für Initialisierung) vornehmen.

In einer technisch vorteilhaften Ausführungsform des Verfahrens übernimmt der Kommunikationscontroller mittels der internen Konfigurationsschnittstelle die Kontrolle über einen Adressport des auszulesenden Sende-Blockrams, wobei Daten gleichzeitig von einem Teilbereich des FPGA an eine von der Konfigurationsebene der internen Konfigurationsschnittstelle angelegten Adresse in den Sende-Blockram geschrieben werden, anschließend von der Konfigurationsebene der internen Konfigurationsschnittstelle gelesen werden, im Kommunikationscontroller zwischengespeichert werden, mittels Schreiben von Daten vom Kommunikationscontroller in den Empfangs-Blockram geschrieben werden, wobei die Daten gleichzeitig von einem Teilbereich des FPGA von der von der Konfigurationsebene der internen Konfigurationsschnittstelle angelegten Adresse des Empfangs-Blockram gelesen werden.

Der Kommunikationskontroller steuert somit die Datenübermittlung und benutzt dafür die interne Konfigurationsschnittstelle.

In einer technisch vorteilhaften Ausführungsform des Verfahrens schreibt die interne Konfigurationsschnittstelle unabhängig von der Teilbereich Adressleitung des Blockrams auf die Framebits des Blockrams.

In einer technisch vorteilhaften Ausführungsform des Verfahrens erfolgt die Datenkommunikation zwischen Teilbereichen des FPGAs über extra eingefügte Blockrams als Kommunikationsgateways.

In einer technisch vorteilhaften Ausführungsform des Verfahrens wird der Kommunikationscontroller über eine einzelne dedizierte Steuerleitung oder durch ein regelmäßiges Pollen der Block-Ram Daten mittels eines Übertragungsflags getriggert.

In einer technisch vorteilhaften Ausführungsform des Verfahrens umfasst das Verfahren zur Synchronisation der Blockram Zugriffe ein Busy-Signal, das jedem Blockram dediziert signalisiert, ob der Blockram gerade über die interne Konfigurationsschnittstelle aktualisiert wird, wobei das Busy-Signal durch
- eine 1 Bit Busy-Signal Leitung gezogen zu jedem Blockram realisiert ist, oder
- ein erstes Blockram Element und ein letztes Blockram Element für das Busy-Signal verwendet wird, wobei ein erstes Wort im ersten Blockram Element das Busy-Signal startet und ein letztes genutztes Word im letzten Blockram Element das Busy-Signal beendet,
- den Kommunikationscontroller über die Konfigurationsebene in ein Register konfiguriert wird, wobei dieses Register dafür in eine CLB Frame Region platziert wird, die keine aktiven Teile der FPGA Applikation enthält, damit eine Read-Modify-Write Sequenz dieses CLB Frames keine Laufzeitwerte der FPGA Applikation verfälscht.

Ein Busy-Signal ist vorteilhaft, damit die Blockrams nicht während eines Updates aus der Konfigurationsebene mit inkonsistenten Ständen verwendet werden.

In einer weiteren Ausführungsform des Verfahrens kann auch ein Wartesignal vorgesehen sein, um anzuzeigen, dass das Model den empfangenden Blockram noch nicht ausgelesen hat, und daher eine weitere Übertragung warten sollte. Die Implementierung kann entsprechend dem Busy-Signal erfolgen; zusätzlich kann eine Rückpropagation zu weiteren sendenden Elementen erfolgen.

Gemäß einem weiteren Aspekt wird die erfindungsgemäße Aufgabe durch ein Datenverarbeitungsvorrichtung, die Mittel zur Ausführung des Verfahrens nach einem der vorherigen Ansprüche umfasst.

Gemäß einem weiteren Aspekt wird die erfindungsgemäße Aufgabe durch ein Computerprogrammprodukt gelöst, umfassend Befehle, die bei der Ausführung des Programms durch einen Computer bewirken, dass der Computer das zuvor beschriebene Verfahren ausführt.

Ausführungsbeispiele der Erfindung sind in den Zeichnungen dargestellt und werden im Folgenden näher beschrieben.

Es zeigen:
- Fig. 1: ein Blockdiagramm einer FPGA-Einheit mit einem FPGA bei dem ein Schreiben eines Blockrams gemäß einem Ausführungsbeispiel der Erfindung gezeigt ist,
- Fig. 2: ein Blockdiagramm einer FPGA-Einheit mit einem FPGA bei dem ein Lesen eines Blockrams gemäß einem weiteren Ausführungsbeispiel der Erfindung gezeigt ist,
- Fig. 3: ein Blockdiagramm einer FPGA-Einheit mit einem FPGA bei dem eine Datenkommunikation zwischen Teilbereichen des FPGA über Blockrams gemäß einem weiteren Ausführungsbeispiel der Erfindung gezeigt ist,
- Fig. 4: ein Beispiel eines Frames eines konfigurierbaren logischen Blocks mit Flip-Flop Positionen,
- Fig. 5: ein Beispiel eines Blockram Frames.

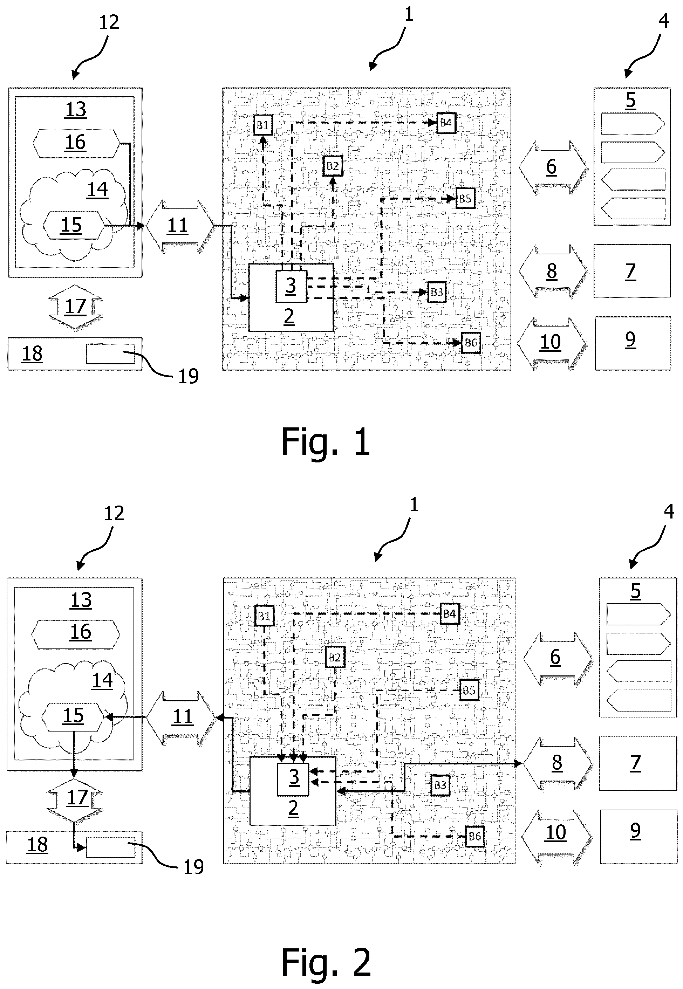

Im Folgenden werden zunächst die grundlegenden Merkmale der in den Figuren 1 bis 3 gezeigten Blockdiagramme beschrieben. Die Blockdiagramme zeigen einen FPGA 1 der frei konfigurierbare Teilbereich umfasst. In den frei konfigurierbaren Teilbereichen sind mehrere Blockrams B1, B2, B3, B4, B5, B6 implementiert. Der FPGA 1 kann Daten mit externen Bausteinen 4 austauschen, z.B. kann der FPGA 1 über einen Eingabe/Ausgabe-Bus 6 Daten mit einer externen Eingabe/Ausgabe 5 austauschen. Beispielsweise kann hierfür eine LVDS FPGA I/O Modul Schnittstelle als Übertragungsstandard für die Datenkommunikation vorgesehen sein. Auch kann der FPGA beispielsweise über einen RAM Bus 8 Daten mit einem externen RAM 7 austauschen. Mittels eines Multi Gigabit Transceiver (MGT) 10 können Daten auch von einem anderen FPGA 9 zum FPGA 1 übertragen werden. Weiter sind in den Figuren 1 bis 3 eine Echtzeit CPU 12 mit einer Echtzeitanwendung 13 gezeigt die zum Übertragen von Initialisierungsdaten 16 und über ein CPU Model 14 zur Übertragung von Echtzeitdaten 15 dient. Die Daten werden über einen Kommunikationsbus 11 beispielsweise an den Kommunikationscontroller 2 übertragen.

In Fig. 1 ein Blockdiagramm einer FPGA-Einheit mit einem FPGA 1 gezeigt, bei dem ein Schreiben eines Blockrams B1, B2, B3, B4, B5, B6 gemäß einem Ausführungsbeispiel der Erfindung gezeigt ist. Es werden somit Daten von einer Quelle, die sich auch außerhalb des FPGAs 1 befinden kann, zu einem Blockram B1, B2, B3, B4, B5, B6 übertragen und in den Blockram B1, B2, B3, B4, B5, B6 geschrieben. In Fig. 1 ist z.B. die Initialisierung des Blockrams B1, B2, B3, B4, B5, B6 durch Initial- oder Modelwerte 16 einer Echtzeitapplikation 13 gezeigt. Daten werden z.B. von einer Echtzeit CPU 12 oder über ein Kommunikationsnetzwerk und/oder einen Kommunikationsbus von einem anderen FPGA zu den Blockrams B1, B2, B3, B4, B5, B6 des FPGAs 1 übertragen. Als weiteres Ausführungsbeispiel können beispielsweise auch Blockram Daten von einem anderen FPGA 9 per Multi Gigabit Transceiver (MGT) zu den Blockrams B1, B2, B3, B4, B5, B6 des FPGAs übertragen werden. Auch besteht die Möglichkeit Daten von einem i.d.R. 100x größeren externen RAM 7 mittels eines RAM Bus 8 zu den Blockrams B1, B2, B3, B4, B5, B6 des FPGAs 1 zu übertragen.

In einem weiteren Ausführungsbeispiel der Erfindung ist ein Blockram Lesen vorgesehen. Dies ist beispielsweise in Fig. 2 gezeigt. Daten werden von einem Blockram B1, B2, B4, B5, B6 zu einem Ziel z.B. externes DRAM 7 übertragen. Beispielsweise kann auch die Speichertiefe eines FPGA 1 internen Logikanalysators durch Kopieren aus dem begrenzten Blockram B1, B2, B3, B4, B5, B6 zum 100x größeren externen RAM 7 erweitert werden. Anschließend können Logikanalysator Werte aus dem externen RAM 7 durch das Host Tool über die eine Data Acquisition Schnittstelle der Echtzeitapplikation 13 über den FPGA 1 ausgelesen werden. In einem weiteren Ausführungsbeispiel können Daten vom FPGA Blockram B1, B2, B3, B4, B5, B6 über ein Kommunikationsnetzwerk und/oder einen Kommunikationsbus zu einer SSD in einer Echtzeit CPU 12 übertragen werden.

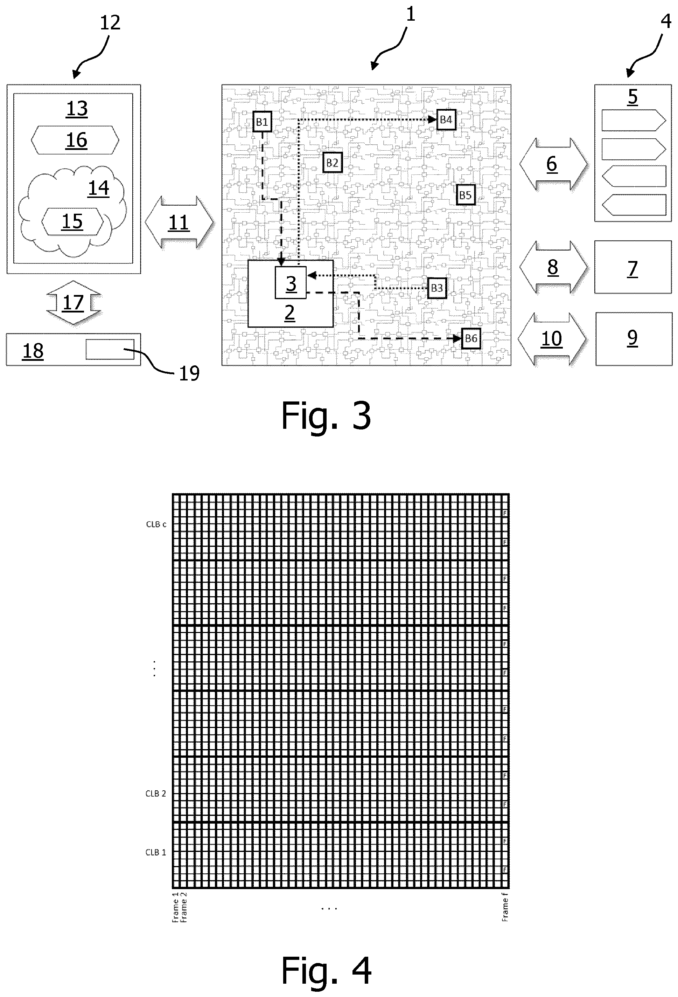

In Fig. 3 ist das Übertragen von Daten von einem Blockram B1, B3 zu einem anderen Blockram B4, B6 gezeigt. Hierdurch können beispielsweise die folgenden Anwendungsfälle realisiert werden. In einem Ausführungsbeispiel kann eine Datenkommunikation zwischen konfigurierbaren Teilbereichen des FPGA 1 über extra eingefügte Blockram-Gateways B1, B2, B3, B4, B5, B6 und einer Kopier Aktion zwischen diesen Blockram Gateways hergestellt werden. Es wird somit ein Kopieren von Blockraminhalten zwischen zwei Teilbereichen die beide Blockrams umfassen ermöglicht. Dieses Ausführungsbeispiel ermöglicht eine Kommunikation von ggf. mehreren weit im FPGA 1 voneinander entfernten Teilbereichen ohne kostspielige Busverdrahtung zu allen Kommunikationspartnern. Dazu benötigt jeder Kommunikationspartner einen zusätzlichen Blockram B1, B2, B3, B4, B5, B6, der als reiner Kommunikationsgateway agiert. Zur Kommunikation werden Daten von einem Teilbereich in seinen Sende-Blockram B1, B3 geschrieben und vom Kommunikationscontroller 2 in den Empfangs-Blockram B4, B6 eines anderen Teilbereichs umkopiert, um dort wieder ausgelesen zu werden. Durch das serielle Lesen, Zwischenspeichern im Kommunikationscontroller 2 und anschließende Schreiben in den Zielspeicher wird die Netto-Datenrate im Normalfall geviertelt. Damit sie nicht geviertelt wird, kann ggf. eine der folgenden Maßnahmen ergriffen werden, um einen pipelined Datentransfer zu erreichen. Abhängig von der technologischen Ausprägung des FPGAs 1 können verschiedene Ausführungsbeispiele vorgesehen sein. In einem Ausführungsbeispiel übernimmt die internen Konfigurationsschnittstelle 3 die Kontrolle über einen Adressport des auszulesenden Sende-Blockrams B1, B3. Es können Daten gleichzeitig vom Model an die von der Konfigurationsebene angelegte Adresse in den Sende-Blockram B1, B3 geschrieben und anschließend von der Konfigurationsebene gelesen werden, wenn der Sende-Blockram B1, B3 im Schreiben Modus "Lesen nach Schreiben" konfiguriert wurde. D.h. es könnte von einer Stelle aus dem Model mit 32 Bit in den Sende-Blockram B1, B3 geschrieben werden, während die Daten synchron in der Konfigurationsebene zum Kommunikationscontroller übertragen werden. Die Daten müssen am Kommunikationscontroller 2 zwischengespeichert werden. Dazu ist für beliebige Start- und Zielpunkte aber nur 1 Buffer notwendig, da die Übertragungen serialisiert sind. Beim Empfangs-Blockram B4, B6 wird dieselbe Technik angewendet. Der Empfangs-Blockram B4, B6 wird ebenfalls auf den Schreiben Modus "Lesen nach Schreiben" gestellt und auch hier übernimmt die Konfigurationsebene die Adressleitung. Die Daten können dann synchron zum Eintreffen der Daten im Empfangs-Blockram B4, B6 ausgelesen werden. Zur Synchronisierung der Zugriffe kann in einem Ausführungsbeispiel eine Synchronisationsleitung verwendet werden, die später genauer beschrieben wird.

Die interne Konfigurationsschnittstelle 3 schreibt unabhängig von der Model Adressleitung des Blockrams B1, B2, B3, B4, B5, B6 auf die Framebits des Blockrams B1, B2, B3, B4, B5, B6. In diesem Fall kann über eine zweite Zusatzleitung im Model signalisiert werden, das die nächste Datenbit Position im Frame beschrieben wurde, und der Anwender im Model die Adresse auf der Adressleitung inkrementieren darf. Ein Modelteil kann nun ganz normal Daten in den Sende-Blockram B1, B3 schreiben und anschließend den Kommunikationscontroller 2 über eine einzelne Steuerleitung, oder über ein Sendeflag in den Blockram Daten triggern, diese Daten in einen Empfangs-Blockram B4, B6 zu kopieren. Die Adresse des Empfangs-Blockrams B4, B6 kann zum FPGA Build Zeitpunkt einmalig festgelegt, oder vom FPGA Model zur Init-/Laufzeit in den Blockram Daten hinterlegt werden. Der Kommunikationscontroller 2 wird entweder über die dedizierte Signalleitung oder durch ein regelmäßiges Pollen der Blockram Daten auf das Übertragungsflag getriggert, die Datenübertragung, ggf. unter Auslesen der Empfangsadresse aus den Blockram Daten, vorzunehmen. Da Sende-Blockram B1, B3 und Empfangs-Blockram B4, B6 auf demselben Template basieren, können die kompletten Blockram Frames, ausgelesen und geschrieben werden, ohne die reinen Daten rausfiltern zu müssen. Dadurch erspart man sich das Lesen beim Lesen-Ändern-Schreiben Zugriff auf das Empfangs-Blockram B4, B6.

In einem weiteren Ausführungsbeispiel können somit Daten von Blockraminhalten zwischen zwei Teilbereichen kopiert werden, die beide Blockrams verwenden. Im Model werden von mehreren Teilbereichen Blockram Speicher verwendet, die umkopiert werden sollen. Dieser Fall ist ein Unterfall des zuvor beschriebenen Ausführungsbeispiels, bei dem das Einfügen der Sende-Blockrams B1, B3 und Empfangs-Blockrams B4, B6 entfällt, da bereits Model-Blockrams vorhanden sind, zwischen denen über den Kommunikationscontroller 2 analog zu dem zuvor beschriebenen Ausführungsbeispiels gepipelined Daten ausgetauscht werden können. Beispielsweise können mehrere Blockrams B1, B2, B3, B4, B5, B6 über den Kommunikationscontroller mit dem zuvor beschriebenen Verfahren synchron gehalten werden.

Im Folgenden wird das Lesen bzw. Schreiben von Blockrams B1, B2, B3, B4, B5, B6 beschrieben. Die z.B. in Xilinx FPGAs integrierte interne Konfigurationsschnittstelle 3 z.B. eine ICAP Schnittstelle erlaubt das Lesen von und Schreiben auf Elemente in der FPGA Konfigurationsebene. Dabei sind die Elemente nicht über einen direkten Adresszugang erreichbar, sondern in sogenannten Frames mit unterschiedlichen Frame-Typen organisiert. Der Zugriff auf CLB (Configurable Logic Block) Elemente, wie z.B. Flip-Flops, erfolgt über CLB Frames, die jeweils aus den CLBs einer FPGA Spalte bestehen. Während ein bestimmtes CLB Frame direkt adressierbar ist, erfolgt der Zugriff auf die Elemente innerhalb des CLB Frames sequentiell. Es müssen stets alle Elemente vom Anfang eines Frames bis zu dem relevanten Element im Frame gelesen, bzw. geschrieben werden.

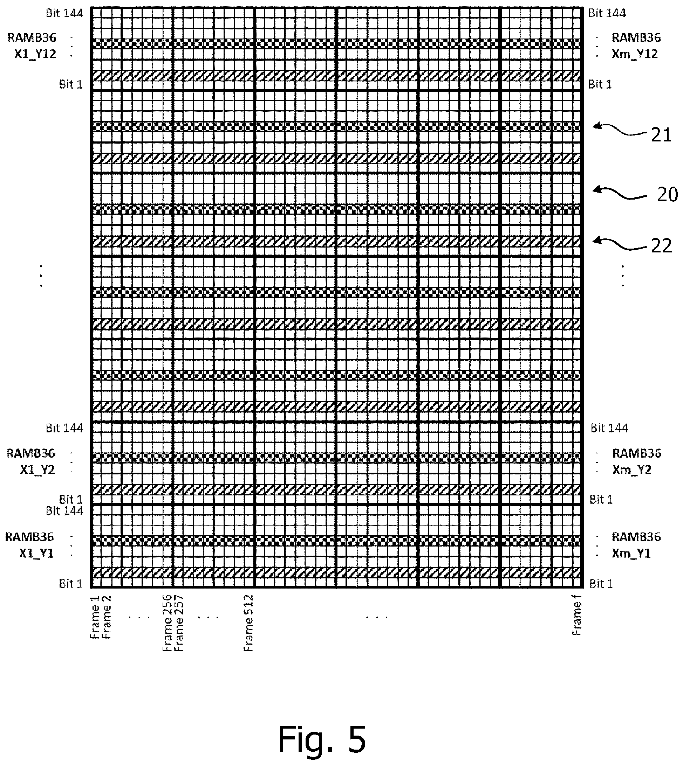

Blockrams B1, B2, B3, B4, B5, B6 sind über Blockram Frames adressierbar. Die undokumentierte Organisation der Blockram Frames kann aus einem Logic Location File für ein erstelltes und implementiertes Design rekonstruiert werden. Jedes Blockram Element ist in einer bestimmten Anzahl an Daten Bits und Parity Bits unterteilt. In Fig. 5 ist als Beispiel ein Blockram Frame mit RAMB36 Positionen eines Kintex UltraScale+ FPGAs gezeigt. Durch die in Fig. 5 dargestellte Organisation der RAMB36 Blöcke in den BRAM Frames sind beispielsweise beim Kintex UltraScale(+) jeweils 12 RAMB36 Blöcke anteilig in einem BRAM Frame enthalten. D.h. für optimale Lese-/Schreib Performance sollten möglichst die 12 Blockrams innerhalb eines Frames genutzt werden, da ein Frame nur sequenziell gelesen/geschrieben werden kann. Der erste RAMB36 im Frame ist direkt erreichbar, und hat die maximale Performance. Für den letzten RAMB36 im Frame müssen erst alle anderen 11 gelesen werden. D.h. der letzte RAMB36 kann nur die maximale Performance erreichen, wenn alle 12 zusammengehörigen RAMB36 eines Frames gelesen werden. In dem Logic Location File verteilen sich die die 144 Bits (128 Daten + 16 Parität) über 240 Offsets innerhalb eines Frames. Die Paritätsbits 21 sind immer an denselben Offsets, daher ergeben sich die Zeilen für Paritätsbits 21. Innerhalb der 144 Bits sind es 2x 8 Bits Paritätsbits, in der Grafik angedeutet durch nur eine statt 8 Zeilen pro Blockram, also pro eines der 6 x 6 Unterquadrate. Die übersprungenen Offsets sind immer identisch, daher ergeben sich die Zeilen für Konfigurationbits 22 in der Grafik. In der Grafik angedeutet durch eine Zeile, statt mindestens 240 - 144 = 96 Zeilen Blockram, also pro eines der 6 x 6 Unterquadrate. Prinzipiell gibt es auch RAM Konfigurationen ohne Parität, da Parität nur für eine Portbreite von 9, 18 und 36 Bit unterstützt wird. Da der genaue Aufbau abhängig von der Familie bzw. Modellreihe des FPGA ist, stellt dies natürlich nur ein Beispiel dar. Es kann prinzipiell beliebige andere Aufteilungen geben. Die BRAM Struktur und auch die Frames an sich unterscheiden sich mit jeder FPGA Familie.

Die Ansteuerung der interne Konfigurationsschnittstelle 2 erfolgt über Kommandosequenzen. Mit diesen Kommandos können Blockram Frameinhalte gelesen und geschrieben werden. Beim Zugriff auf ein Blockram Frame muss jeweils der gesamte Frameinhalt bis zum Ende oder einer bestimmten Stelle gelesen oder geschrieben werden. Der Rest des Frames beinhaltet die Bits zur Multiplexerkonfiguration, etc. Für das "Blockram Lesen" werden die Datenbits über ihre aus dem Logic Location File bekannten Positionen während des BRAM Frame Reads extrahiert. Diese einfache Aufgabe übernimmt der Kommunikationscontroller 2. Die folgende Tabelle zeigt als Beispiel die Lesen Sequenz für die interne Konfigurationsschnittstelle 3 bzw. ICAP Schnittstelle eines Kintex UltraScale+ zum Lesen von n BRAM Frame Worten. Aus der in der Tabelle aufgelisteten ICAP Lesen Sequenz für n BRAM Frame Worte ergibt sich ein Kommunikationsoverhead von 177 Worten. Für das Lesen von aufeinanderfolgenden Frames muss keine neue Frameadresse angelegt werden, so dass dieser Overhead nur 1-mal anfällt.

| **Schritt** | **Richtung** | **Hex-Command** | **Beschreibung** |
|---|---|---|---|
| 1 | Write | 0xFFFFFFFF | Dummy Word |
| 2 | Write | 0x000000BB | Bus Width Sync Word |
| 3 | Write | 0x11220044 | Bus Width Detect |
| 4 | Write | 0xFFFFFFFF | Dummy Word |
| 5 | Write | 0xAA995566 | Sync word |
| 6 | Write | 0x20000000 | NOOP Word 0 |
| 7 | Write | 0x30008001 | Write 1 word to CMD register |
| 8 | Write | 0x00000007 | RCRC Command |
| 9 | Write | 0x20000000 | NOOP Word 0 |
| 10 | Write | 0x20000000 | NOOP Word 0 |
| 11 | Write | 0x20000000 | NOOP Word 0 |
| 12 | Write | 0x20000000 | NOOP Word 0 |
| 13 | Write | 0x20000000 | NOOP Word 0 |
| 14 | Write | 0x20000000 | NOOP Word 0 |
| 15 | Write | 0x30008001 | Write 1 word to CMD register |
| 16 | Write | 0x00000004 | RCFG Command |
| 17 | Write | 0x20000000 | NOOP Word 0 |
| 18 | Write | 0x30002001 | Write 1 word to FAR register |
| 19 | Write | 0xxxxxxxxx | FAR Address = xxxxxxxx |
| 20 | Write | 0x28006000 | Write one word to FDRO register |
| 21 | Write | 0xxxxxxxxx | Read xxx words from FDRO |
| 22 | Write | 0x20000000 | NOOP Word 0 |
| 53 | Write | ... | 31 more NOOP Word 0 |
| 54 | Read | 0xxxxxxxxx | Packet Data Read FDRO Word 0 |
| 171 | Read | ... | |
| 172 | Read | 0xxxxxxxxx | Packet Data Read FDRO Word 0 xxx |
| 172+n | Read | ... | |
| 173+n | Write | 0x20000000 | NOOP Word 0 |
| 174+n | Write | 0x30008001 | Write 1 word to CMD register |
| 175+n | Write | 0x0000000D | DESYNC Command |
| 176+n | Write | 0x20000000 | NOOP Word 0 |
| 177+n | Write | 0x20000000 | NOOP Word 0 |

Damit die Blockrams B1, B2, B3, B4, B5, B6 nicht während eines Updates aus der Konfigurationsebene mit inkonsistenten Ständen verwendet werden, ist in einem Ausführungsbeispiel ein Busy-Signal für den Blockram B1, B2, B3, B4, B5, B6 vorgesehen. Dieses Busy-Signal kann dabei auf verschiedene Arten realisiert werde. In einem Ausführungsbeispiel kann beispielsweise eine 1 Bit Busy-Signal Leitung zu jedem Blockram B1, B2, B3, B4, B5, B6 gezogen werden. Damit reduziert sich die Anzahl der benötigten Routen nicht komplett auf 0, sondern auf 1. Die Busy-Signal Leitung ist die technisch performanteste Realisierung, da sie das Update ohne Latenz anzeigen kann. Sie ist deswegen auch bevorzugt für die Datenkommunikation zwischen Teilbereichen des FPGA Blockrams B1, B2, B3, B4, B5, B6 zu verwenden.

In einem weiteren Ausführungsbeispiel kann die Verwendung des ersten und letzten Blockram Elements als Busy-Signal verwendet werden. Dazu muss die um zwei verringerte Blockram Größe im Model berücksichtigt werden. Außerdem muss die Adresse im Model automatisch um 1 inkrementiert werden. Beispielsweise kann das erste Wort im Blockram das Busy-Signal starten, da es auch zuerst beschrieben wird. Das Busy-Signal kann bei (Adresse == 0) AND (Wechsel des Block-ram Werts) auf 1 gesetzt werden. Das letzte genutzte Wort im Blockram kann das Busy-Signal beenden. Das Busy Signal kann bei (Busy-Signal == 1) AND (Adresse == letzte genutzte) wieder auf 0 gesetzt werden.

Um auch die letzte Route zu sparen, könnte man auf die Idee kommen, auch das Busy-Signal per partieller Rekonfiguration in ein Register umzukonfigurieren. Da bei einem Register auch der Frame-Inhalt bis zur Register Position über eine Lesen-Ändern-Schreiben Kombination modifiziert werden muss, während zwischenzeitliche Zustandsänderungen im Frame verloren gehen, ist dieser Mechanismus nur mit größerem Aufwand (z.B. dedizierte Frames nur für diese Register, die dann aber weiter entfernt liegen würden) umsetzbar. Dennoch kann es in einem Ausführungsbeispiel vorgesehen sein, dass der Kommunikationscontroller 2 das Busy-Signal über die Konfigurationsebene in ein Register konfiguriert, wobei dieses Register dafür in eine CLB Frame Region platziert wird, die keine aktiven Teile der FPGA Applikation enthält, damit eine Lesen-Ändem-Schreiben Sequenz dieses CLB Frames keine Laufzeitwerte der FPGA Applikation verfälscht.

Alle in Verbindung mit einzelnen Ausführungsformen der Erfindung erläuterten Merkmale können in unterschiedlicher Kombination in dem erfindungsgemäßen Gegenstand vorgesehen sein, um gleichzeitig deren vorteilhafte Wirkungen zu realisieren, auch wenn diese zu unterschiedlichen Ausführungsformen beschrieben worden sind.

Der Schutzbereich der vorliegenden Erfindung ist durch die Patentansprüche gegeben und wird durch die in der Beschreibung erläuterten oder den Figuren gezeigten Merkmale nicht beschränkt.

### Bezugszeichenliste

| | |
|---|---|
| FPGA | 1 |
| Kommunikationscontroller | 2 |
| interne Konfigurationsschnittstelle | 3 |
| Externer Bereich | 4 |
| Eingabe/Ausgabe | 5 |
| Eingabe/Ausgabe Bus | 6 |
| RAM | 7 |
| RAM Bus | 8 |
| FPGA | 9 |
| Multi-Gigabit Transceiver (MGT) | 10 |
| Kommunikationsbus | 11 |
| Echtzeit CPU | 12 |
| Echtzeit Anwendung | 13 |
| CPU Model | 14 |
| Echtzeitdaten | 15 |
| Initialisierungsdaten | 16 |
| TRC | 17 |
| Host-/Bedien-PC | 18 |
| Anzeigeinstrument | 19 |
| Datenbits | 20 |
| Paritätsbits | 21 |
| Konfigurationbits | 22 |
| Blockram 1 | B1 |
| Blockram 2 | B2 |
| Blockram 3 | B3 |
| Blockram 4 | B4 |
| Blockram 5 | B5 |
| Blockram 6 | B6 |

## Patentansprüche

1. Verfahren zur Datenkommunikation zwischen zumindest einem Teilbereich eines FPGAs und einem weiteren Bereich, das Verfahren umfassend die folgenden Schritte:
- Bereitstellen einer FPGA-Einheit mit einem FPGA (1), der FPGA (1) umfassend
einen Kommunikationscontroller (2) mit einem Zwischenspeicher, wobei der Kommunikationscontroller (2) eingerichtet ist, eine Datenkommunikation zwischen Teilbereichen des FPGAs (1) bereitzustellen, wobei der FPGA (1) zumindest einen ersten Teilbereich umfasst, wobei der erste Teilbereich ein Blockram (B1, B2, B3, B4, B5, B6) ist, **dadurch gekennzeichnet,**
**dass** der Kommunikationscontroller (2) eine interne Konfigurationsschnittstelle (3) eingerichtet zur Konfiguration des FPGAs (1) und zum Rücklesen von Konfigurationsdaten umfasst, wobei die Ansteuerung der internen Konfigurationsschnittstelle (3) über Kommandosequenzen erfolgt,
wobei der Blockram (B1, B2, B3, B4, B5, B6) über einen Blockram Frame adressierbar ist, wobei der Blockram-Frame feste Konfigurationsbits (22) und variable Datenbits (20) umfasst,
wobei über die Kommandosequenzen der interne Konfigurationsschnittstelle (3) Blockram Frameinhalte lesbar und schreibbar sind, wobei
die relativen Positionen und festen Werte der Konfigurationsbits (22) sowie die relativen Positionen der variablen Datenbits (20) in dem Blockram Frame aus einer Rekonstruktion eines Logic Location Files ermittelt wird, wobei
ein Schreiben des Blockrams (B1, B2, B3, B4, B5, B6) mittels einer Lesen-Ändern-Schreiben-Sequenz erfolgt und die folgenden Schritte umfasst:
- Lesen eines aktuellen Inhalts eines Blockram Frames und Abspeichern des Inhalts des Blockram Frames in den Zwischenspeicher des Kommunikationscontrollers (2) mittels einer Lesen-Sequenz,
- Einfügen von Datenbits an ihren festen, aus dem Logic Location File bekannten Positionen in den Blockram Frame mittels einer Schreiben-Sequenz
oder ein Schreiben des Blockrams (B1, B2, B3, B4, B5, B6) erfolgt mittels eines Templates, wobei das Template die aus der Rekonstruktion des Logic Location Files ermittelten relativen Positionen und festen Werte der Konfigurationsbits (22) sowie die relativen Positionen der variablen Datenbits (20) in dem Blockram Frame enthält, wobei das Template zuvor in dem Kommunikationscontroller (2) abgespeichert wurde.

2. Verfahren nach Anspruch 1, **dadurch gekennzeichnet, dass**
ein Lesen der Blockrams (B1, B2, B3, B4, B5, B6) mittels einer Blockram-Lese-Sequenz erfolgt wobei das Lesen der Blockrams (B1, B2, B3, B4, B5, B6) die folgenden Schritte umfasst:
- Extrahieren von Datenbits aus dem Blockram Frame über ihre aus dem Logic Location File bekannten Positionen mittels des Kommunikationscontrollers (2), wobei das Extrahieren der Datenbits mittels Kommandosequenzen der interne Konfigurationsschnittstelle (3) erfolgt.

3. Verfahren nach Anspruch 1, **dadurch gekennzeichnet, dass** im Kommunikationscontroller (2) verschiedene Templates für verschiedene Blockram-Typen (B1, B2, B3, B4, B5, B6) hinterlegt sind.

4. Verfahren nach einem der vorherigen Ansprüche, **dadurch gekennzeichnet, dass** in dem Template die relativen Positionen und festen Werte der Konfigurationsbits (22) sowie die relativen Positionen der variablen Datenbits (20) in einem VHDL-Code für einen FPGA Build hinterlegt sind.

5. Verfahren nach einem der vorherigen Ansprüche, **dadurch gekennzeichnet, dass** der FPGA einen Sende-Blockram (B1, B3) und einen Empfangs-Blockram (B4, B6) umfasst, und das Verfahren die zusätzlichen Schritte umfasst:
- Schreiben von Daten in den Sende-Blockram (B1, B3) mittels des Verfahrensschritts für das Schreiben von Blockram,
- Triggern des Kommunikationscontrollers zum Kopieren der Daten vom Sende-Blockram (B1, B3) in den Empfangs-Blockram (B4, B6),
- Kopieren der Daten von dem Sende-Blockram (B1, B3) zu dem Empfangs-Block-ram (B4, B6), mittels des Verfahrensschritts des Lesens des Blockrams und des Verfahrensschritts des Schreibens des Blockrams.

6. Verfahren nach Anspruch 5, **dadurch gekennzeichnet, dass** der Kommunikationscontroller (2) mittels der internen Konfigurationsschnittstelle (3) die Kontrolle über einen Adressport des auszulesenden Sende-Blockrams (B1, B3) übernimmt, wobei Daten gleichzeitig von einem Teilbereich des FPGA (1) an eine von der Konfigurationsebene der internen Konfigurationsschnittstelle (3) angelegten Adresse in den Sende-Blockram (B1, B3) geschrieben werden, anschließend von der Konfigurationsebene der internen Konfigurationsschnittstelle (3) gelesen werden, im Kommunikationscontroller (2) zwischengespeichert werden, mittels Schreiben von Daten vom Kommunikationscontroller (2) in den Empfangs-Block-ram (B4, B6) geschrieben werden, wobei die Daten gleichzeitig von einem Teilbereich des FPGA (1) von der von der von der Konfigurationsebene der internen Konfigurationsschnittstelle (3) angelegten Adresse des Empfangs-Blockram (B4, B6) gelesen werden.

7. Verfahren nach Anspruch 5, **dadurch gekennzeichnet, dass** die interne Konfigurationsschnittstelle (3) unabhängig von der Teilbereich Adressleitung des Blockrams auf die Framebits des Blockrams schreibt.

8. Verfahren nach Anspruch 5, **dadurch gekennzeichnet, dass** die Datenkommunikation zwischen Teilbereichen des FPGAs (1) über extra eingefügte Blockrams (B1, B2, B3, B4, B5, B6) als Kommunikationsgateways erfolgt.

9. Verfahren nach einem der vorherigen Ansprüche, **dadurch gekennzeichnet, dass** der Kommunikationscontroller (2) über eine einzelne dedizierte Steuerleitung oder durch ein regelmäßiges Pollen der Block-Ram Daten mittels eines Übertragungsflags getriggert wird.

10. Verfahren nach einem der vorherigen Ansprüche, **dadurch gekennzeichnet, dass** das Verfahren zur Synchronisation der Blockram Zugriffe ein Busy-Signal umfasst, das jedem Blockram (B1, B2, B3, B4, B5, B6) dediziert signalisiert, ob der Blockram (B1, B2, B3, B4, B5, B6) gerade über die interne Konfigurationsschnittstelle aktualisiert wird, wobei das Busy-Signal durch
- eine 1 Bit Busy-Signal Leitung gezogen zu jedem Blockram (B1, B2, B3, B4, B5, B6) realisiert ist, oder
- ein erstes Blockram Element und ein letztes Blockram Element für das Busy-Signal verwendet wird, wobei ein erstes Wort im ersten Blockram Element das Busy-Signal startet und ein letztes genutztes Word im letzten Blockram Element das Busy-Signal beendet,
- den Kommunikationscontroller (2) über die Konfigurationsebene in ein Register konfiguriert wird, wobei dieses Register dafür in eine CLB Frame Region platziert wird, die keine aktiven Teile der FPGA Applikation enthält, damit eine Lesen-Ändern-Schreiben Sequenz dieses CLB Frames keine Laufzeitwerte der FPGA Applikation verfälscht.

11. Datenverarbeitungsvorrichtung, die Mittel zur Ausführung des Verfahrens nach einem der vorherigen Ansprüche umfasst.

12. Computerprogrammprodukt, umfassend Befehle, die bei der Ausführung des Programms durch einen Computer bewirken, dass der Computer das Verfahren nach einem der Ansprüche 1 bis 10 ausführt.

## Claims

1. A method for data communication between at least one sub-area of an FPGA and a further area, the method comprising the following steps:
- providing an FPGA unit having an FPGA (1), the FPGA (1) comprising
a communication controller (2) having a buffer memory, the communication controller (2) being configured to provide data communication between sub-areas of the FPGA (1), the FPGA (1) comprising at least one first sub-area, the first sub-area being a block RAM (B1, B2, B3, B4, B5, B6), **characterized in that**
the communication controller (2) comprises an internal configuration interface (3) configured to configure the FPGA (1) and to read back configuration data, wherein the internal configuration interface (3) is actuated via command sequences,
wherein the block RAM (B1, B2, B3, B4, B5, B6) can be addressed via a block RAM frame, wherein the block RAM frame comprises fixed configuration bits (22) and variable data bits (20),
wherein block RAM frame contents can be read and written via the command sequences of the internal configuration interface (3), wherein
the relative positions and fixed values of the configuration bits (22) and the relative positions of the variable data bits (20) in the block RAM frame are determined from a reconstruction of a logic location file, wherein
the block RAM (B1, B2, B3, B4, B5, B6) is written by means of a read/change/write sequence and comprises the following steps:
- reading a current content of a block RAM frame and storing the content of the block RAM frame in the buffer memory of the communication controller (2) by means of a read sequence,
- inserting data bits at the fixed positions thereof known from the logic location file into the block RAM frame by means of a write sequence
or a writing of the block RAM (B1, B2, B3, B4, B5, B6) is performed by means of a template, wherein the template contains the relative positions and fixed values of the configuration bits (22) determined from the reconstruction of the logic location file and the relative positions of the variable data bits (20) in the block RAM frame, wherein the template has previously been stored in the communication controller (2).

2. The method according to claim 1, **characterized in that**
the block RAMs (B1, B2, B3, B4, B5, B6) are read by means of a block RAM read sequence, wherein the reading of the block RAMs (B1, B2, B3, B4, B5, B6) comprises the following steps:
- extracting data bits from the block RAM frame via the positions thereof known from the logic location file by means of the communication controller (2), wherein the extracting of the data bits is carried out by means of command sequences of the internal configuration interface (3).

3. The method according to claim 1, **characterized in that** different templates for different block RAM types (B1, B2, B3, B4, B5, B6) are stored in the communication controller (2).

4. The method according to any one of the preceding claims, **characterized in that** the relative positions and fixed values of the configuration bits (22) and the relative positions of the variable data bits (20) are stored in the template in a VHDL code for an FPGA build.

5. The method according to any one of the preceding claims, **characterized in that** the FPGA comprises a transmit block RAM (B1, B3) and a receive block RAM (B4, B6), and the method comprises the additional steps:
- writing data to the transmit block RAM (B1, B3) using the procedure step for writing block RAMs,
- triggering the communication controller to copy the data from the transmit block RAM (B1, B3) to the receive block RAM (B4, B6),
- copying the data from the transmit block RAM (B1, B3) to the receive block RAM (B4, B6) by means of the method step of reading the block RAM and the method step of writing the block RAM.

6. The method according to claim 5, **characterized in that** the communication controller (2) takes control of an address port of the transmit block RAM (B1, B3) to be read out by means of the internal configuration interface (3), wherein data is written simultaneously from a sub-area of the FPGA (1) to an address created by the configuration level of the internal configuration interface (3) in the transmit block RAM (B1, B3), then read by the configuration level of the internal configuration interface (3), temporarily stored in the communication controller (2), written to the receive block RAM (B4, B6) by writing data from the communication controller (2), wherein the data is simultaneously read by a sub-area of the FPGA (1) from the address of the receive block RAM (B4, B6) created by the configuration level of the internal configuration interface (3).

7. The method according to claim 5, **characterized in that** the internal configuration interface (3) writes to the frame bits of the block RAM independently of the sub-area address line of the block RAM.

8. The method according to claim 5, **characterized in that** the data communication between sub-areas of the FPGA (1) takes place via specially inserted block RAMs (B1, B2, B3, B4, B5, B6) as communication gateways.

9. The method according to any one of the preceding claims, **characterized in that** the communication controller (2) is triggered via a single dedicated control line or by a regular polling of the block RAM data by means of a transmission flag.

10. The method according to any one of the preceding claims, **characterized in that** the method for synchronizing the block RAM accesses comprises a busy signal for signaling to each block RAM (B1, B2, B3, B4, B5, B6) in a dedicated manner whether the block RAM (B1, B2, B3, B4, B5, B6) is currently being updated via the internal configuration interface, wherein
- the busy signal is generated by a 1-bit busy signal line drawn to each block RAM (B1, B2, B3, B4, B5, B6), or
- a first block RAM element and a last block RAM element are used for the busy signal, wherein a first word in the first block RAM element starts the busy signal and a last word used in the last block RAM element ends the busy signal
- the communication controller (2) is configured in a register via the configuration level, wherein to this end said register is placed in a CLB frame region not containing any active parts of the FPGA application, so that a read/change/write sequence of said CLB frame does not falsify any runtime values of the FPGA application.

11. A data processing apparatus comprising means for performing the method according to any one of the preceding claims.

12. A computer program product comprising commands which, when the program is executed by a computer, cause the computer to perform the method according to any one of claims 1 to 10.

## Revendications

1. Procédé de communication de données entre au moins une zone partielle d'un FPGA et une zone supplémentaire, le procédé comprenant les étapes suivantes:
- fournir une unité de FPGA comprenant un FPGA (1), le FPGA (1) comprenant
un contrôleur de communication (2) doté d'une mémoire cache, le contrôleur de communication (2) étant conçu pour fournir une communication de données entre des zones partielles du FPGA (1), le FPGA (1) comprenant au moins une première zone partielle, la première zone partielle étant une RAM en bloc (B1, B2, B3, B4, B5, B6), **caractérisé en ce que**
le contrôleur de communication (2) comprend une interface de configuration interne (3) conçue pour la configuration du FPGA (1) et pour la relecture de données de configuration, la commande de l'interface de configuration interne (3) s'effectuant par des séquences d'instructions,
la RAM en bloc (B1, B2, B3, B4, B5, B6) étant adressable via une trame de RAM en bloc, la trame de RAM en bloc comprenant des bits de configuration fixes (22) et des bits de données variables (20),
des contenus de trame de RAM en bloc pouvant être lus et écrits par l'intermédiaire des séquences d'instructions de l'interface de configuration interne (3),
les positions relatives et les valeurs fixes des bits de configuration (22) ainsi que les positions relatives des bits de données variables (20) dans la trame de RAM en bloc étant déterminées à partir d'une reconstruction d'un fichier d'emplacement logique,
une écriture de la RAM en bloc (B1, B2, B3, B4, B5, B6) étant effectuée au moyen d'une séquence lecture-modification-écriture et comprenant les étapes suivantes:
- lecture d'un contenu actuel d'une trame de RAM en bloc et mémorisation du contenu de la trame de RAM en bloc dans la mémoire cache du contrôleur de communication (2) au moyen d'une séquence de lecture,
- insertion de bits de données à leurs positions fixes, connues du fichier d'emplacement logique, dans la trame de RAM en bloc au moyen d'une séquence d'écriture
ou une écriture de la RAM en bloc (B1, B2, B3, B4, B5, B6) étant effectuée au moyen d'un modèle, le modèle contenant les positions relatives et les valeurs fixes des bits de configuration (22) déterminées à partir de la reconstruction du fichier d'emplacement logique ainsi que les positions relatives des bits de données variables (20) dans la trame de RAM en bloc, le modèle ayant été préalablement mémorisé dans le contrôleur de communication (2).

2. Procédé selon la revendication 1, **caractérisé en ce que**
une lecture de la RAM en bloc (B1, B2, B3, B4, B5, B6) s'effectue au moyen d'une séquence de lecture de RAM en bloc, la lecture de la RAM en bloc (B1, B2, B3, B4, B5, B6) comprenant les étapes suivantes:
- extraction de bits de données de la trame de RAM en bloc par l'intermédiaire de leurs positions connues à partir du fichier d'emplacement logique au moyen du contrôleur de communication (2), l'extraction des bits de données étant effectuée au moyen de séquences d'instructions de l'interface de configuration interne (3).

3. Procédé selon la revendication 1, **caractérisé en ce que** différents modèles sont stockés dans le contrôleur de communication (2) pour différents types de RAM en bloc (B1, B2, B3, B4, B5, B6).

4. Procédé selon l'une des revendications précédentes, **caractérisé en ce que**, dans le modèle, les positions relatives et les valeurs fixes des bits de configuration (22) ainsi que les positions relatives des bits de données variables (20) sont stockées dans un code VHDL pour une version de FPGA.

5. Procédé selon l'une des revendications précédentes, **caractérisé en ce que** le FPGA comprend une RAM en bloc d'émission (B1, B3) et une RAM en bloc de réception (B4, B6), et le procédé comprend les étapes supplémentaires suivantes:
- écriture de données dans la RAM en bloc d'émission (B1, B3) au moyen de l'étape de procédé pour l'écriture de RAM en bloc,
- déclenchement du contrôleur de communication pour copier les données de la RAM en bloc d'émission (B1, B3) dans la RAM en bloc de réception (B4, B6),
- copie des données de la RAM en bloc d'émission (B1, B3) dans la RAM en bloc de réception (B4, B6) au moyen de l'étape de procédé de lecture de la RAM en bloc et de l'étape de procédé d'écriture de la RAM en bloc.

6. Procédé selon la revendication 5, **caractérisé en ce que** le contrôleur de communication (2), au moyen de l'interface de configuration interne (3), prend en charge le contrôle d'un port d'adresse de la RAM en bloc d'émission (B1, B3) à lire, des données étant écrites simultanément à partir d'une zone partielle du FPGA (1) à une adresse créée par le niveau de configuration de l'interface de configuration interne (3) dans la RAM en bloc d'émission (B1, B3), ensuite lues du niveau de configuration de l'interface de configuration interne (3), stockées temporairement dans le contrôleur de communication (2), écrites dans la RAM en bloc de réception (B4, B6) au moyen de l'écriture de données par le contrôleur de communication (2), les données étant lues simultanément par une zone partielle du FPGA (1) à partir de l'adresse de la RAM en bloc de réception (B4, B6) créée par le niveau de configuration de l'interface de configuration interne (3).

7. Procédé selon la revendication 5, **caractérisé en ce que** l'interface de configuration interne (3) écrit sur les bits de trame de la RAM en bloc indépendamment de la ligne d'adresse de zone partielle de la RAM en bloc.

8. Procédé selon la revendication 5, **caractérisé en ce que** la communication de données entre des zones partielles du FPGA (1) s'effectue par l'intermédiaire de RAM en bloc (B1, B2, B3, B4, B5, B6) insérées spécialement en tant que passerelles de communication.

9. Procédé selon l'une des revendications précédentes, **caractérisé en ce que** le contrôleur de communication (2) est déclenché par le biais d'une seule ligne de commande dédiée ou par une interrogation régulière des données de RAM en bloc au moyen d'un fanion de transmission.

10. Procédé selon l'une des revendications précédentes, **caractérisé en ce que** le procédé de synchronisation des accès à la RAM en bloc comprend un signal d'occupation qui signale de manière dédiée à chaque RAM en bloc (B1, B2, B3, B4, B5, B6) si la RAM en bloc (B1, B2, B3, B4, B5, B6) est en cours de mise à jour par le biais de l'interface de configuration interne, le signal d'occupation
- étant réalisé par une ligne de signal d'occupation de 1 bit, tirée pour chaque RAM en bloc (B1, B2, B3, B4, B5, B6), ou
- un premier élément de RAM en bloc et un dernier élément de RAM en bloc étant utilisés pour le signal d'occupation, un premier mot dans le premier élément de RAM en bloc démarrant le signal d'occupation et un dernier mot utilisé dans le dernier élément de RAM en bloc terminant le signal d'occupation,
- étant configuré par le contrôleur de communication (2) dans un registre par le biais du niveau de configuration, ce registre étant placé à cet effet dans une région de trame CLB qui ne contient pas de parties actives de l'application FPGA, afin qu'une séquence de lecture-modification-écriture de cette trame CLB ne fausse pas de valeurs de durée d'exécution de l'application FPGA.

11. Dispositif de traitement de données, qui comprend des moyens pour mettre en œuvre le procédé selon l'une des revendications précédentes.

12. Produit de programme informatique, comprenant des instructions qui, lorsque le programme est exécuté par un ordinateur, amènent l'ordinateur à mettre en œuvre le procédé selon l'une des revendications 1 à 10.
